# EUROPEAN PATENT SPECIFICATION

(11) **EP 1 743 060 B1**
(45) Date of publication and mention of the grant of the patent: **01.03.2017**
(21) Application number: 05740262.0
(22) Date of filing: 25.04.2005
(51) Int. Cl.: C04B 30/02, D04H 13/00, E04B 1/76, E04B 1/94, E04B 9/04, C04B 111/28, D04H 1/4218, D04H 1/4226

(54) **FLAME RESISTANT FIBROUS INSULATION AND METHODS OF MAKING THE SAME**
FLAMMFESTE FASERISOLIERUNG UND VERFAHREN ZU DEREN HERSTELLUNG
ISOLATION FIBREUSE ININFLAMMABLE ET PROCEDES DE FABRICATION

(30) Priority: 26.04.2004 US 831843
(43) Date of publication of application: 17.01.2007
(73) Proprietor: CertainTeed Corporation, Valley Forge, PA 19482 (US)
(72) Inventor: TOAS, Murray, S., Norristown, PA 19401 (US); YANG, Alain, X., Bryn Mawr, PA 19010 (US); DAVIS, Kim, Norristown, PA 19401 (US)
(74) Representative: Saint-Gobain Recherche
(86) International application number: PCT/US2005/013979
(87) International publication number: WO 2005/106089

(56) References cited:
- EP-A2- 0 356 320
- EP-A2- 0 501 271
- FR-A1- 2 640 658
- JP-A- 05 248 592
- JP-A- 06 206 273
- US-A- 2 206 058
- US-A- 3 220 918
- US-A- 4 122 203
- US-A- 4 448 921
- US-A- 4 659 610
- US-B1- 6 296 795

## Description

### BACKGROUND OF THE INVENTION

The invention relates generally to the field of fibrous mineral-based thermal insulating materials.

Fibrous insulation products are widely used in the building construction industries and as components of other manufactured goods such as automobiles, aircraft, and soundproofing products. Various naturally-occurring and synthetic fibrous minerals are used to make fibrous insulation products, including fibers synthesized from glass, rock, slag, or basalt. Fibrous insulation products can be used in the form of loose bulk fibers. Commonly, mineral fibers are bound to one another using any of a variety of known adhesives. Bound mineral fibers are also commonly attached to supports or backings, such as paper and/or metal foils, to facilitate their handling and installation.

Fibrous insulation products are often used in environments (e.g., residences, office buildings, manufacturing facilities, and vehicles) in which fire is a hazard. Previous fibrous insulation products can melt, burn, or otherwise permit passage of flame therethrough when exposed to fire. A need exists for fibrous insulation products having improved flame resistance.

Document US 4 659 610 A discloses a flame resistant insulation product having the features of the preamble of claim 1.

### BRIEF SUMMARY OF THE INVENTION

The invention relates to a flame resistant fibrous insulation product. The product comprises a fibrous mineral (e.g., fiberglass or glass wool) mixed with a phosphate-containing compound and a refractory mineral filler.

In the flame resistant insulation product of the invention, the phosphate-containing compound is monoammonium phosphate and the refractory mineral filler is either alumina or aluminum sulfate in particulate form. For this combination, the phosphate-containing compound and the refractory mineral filler are present in approximately equal weights, and the total weight of the two compounds is at least about 6% (and preferably at least about 11%) of the weight of the fibrous mineral in the insulation product.

The phosphate-containing compound and the refractory mineral filler can be simply interspersed within the fibers of the insulation, which manufacturing method is not part of the invention, or incorporated into a binding composition that comprises an adhesive (e.g., a polymer commonly used for binding fiberglass in insulation products) for binding the fibrous mineral. Alternatively, the phosphate-containing compound and the refractory mineral filler can be applied to the mineral fibers or the insulation product in the form of a slurry, which manufacturing method is not part of the invention.

The invention also relates to a method of making such insulation products. The flame resistant insulation product of the invention and the method of the invention of making such a flame resistant insulation product are defined by respective claims 1 and 6.

### DETAILED DESCRIPTION OF THE INVENTION

The invention relates to fibrous insulation products that exhibit improved flame resistance, relative to previously known products. The insulation product has a fibrous mineral matrix, into which is incorporated a phosphate-containing compound ("PCC,"), which for the flame resistant insulation product of the invention is monoammonium phosphate, and a refractory mineral filler ("RMF,") which for the flame resistant insulation product of the invention is alumina or aluminum sulfate in particulate form. The product exhibits flame resistance superior to the fibrous mineral matrix alone.

### Definitions

As used herein, each of the following terms has the meaning associated with it in this section.

An "adhesive" is any composition which, in a wet or dried form, is able to bind mineral fibers to one another or to bind the phosphate-containing compound and/or the refractory mineral described herein to a mineral fiber.

"Flame resistance" of an insulation product refers to the time required for a flame to penetrate through the product from a Bunsen burner placed immediately beneath the horizontally-suspended product, such that the hottest part of the flame contacts the insulation product. It takes longer for a flame to penetrate a first fibrous insulation product than a second fibrous insulation product of the same thickness if the first product has greater flame resistance.

### Detailed Description

The invention relates to an insulation product that comprises a fibrous mineral and that exhibits flame resistance greater than that of the fibrous mineral alone. The insulation product comprises, in addition to the fibrous mineral, monoammonium phosphate and a particulate refractory material selected from the group consisting of alumina or aluminum sulfate.

The fibrous mineral, the phosphate-containing compound, and the refractory mineral filler can be present in their free forms (i.e., none bound to the others), such as the bulk fibrous mineral admixed with particulate phosphate-containing compound and particulate refractory mineral filler. Alternatively, the insulation product can comprise a binding composition adhered to one or more of the components. For example, fiberglass insulation products commonly contain glass fibers bound to one another by a polymer matrix in order to give shape, form, and/or color to the fiberglass mass. One or both of the phosphate-containing compound and the refractory mineral filler can be incorporated into the binding composition, such that one or both is bound to the fibrous mineral of the insulation product. Adhesives suitable for use in such binding compositions are known in the art, and include polymers such as acrylic polymers, phenol-formaldehyde, and melamine-based polymers.

The form of the insulation product is not critical. The product can be made in the form of a loose fibrous fill such as is used in wall-, attic-, and cavity-insulating applications. Alternatively, the product can be made in the form of blankets or batts to facilitate handling, cutting, and installation in defined spaces. The insulation can be molded, packaged, or otherwise formed into defined shapes, such as a hollow cylinder for installation around air ducts or an irregularly shaped panel for installation within an automobile frame or a soundproofing barrier.

The insulation product can comprise other components in addition to the fibrous mineral, the phosphate-containing compound, and the refractory mineral filler. By way of example, the product can be adhered to a backing made of paper and/or metal foil, as is common in insulation products intended for insulation of exterior walls, ceilings, or roofs of residential structures. The insulation product can be disposed, adhered, or laminated between two or more supports, such as an air-tight plastic sheet on one face and a deformable metal foil on the opposite face.

The product can be adhered to or bundled with another insulating material, such as the same fibrous mineral (or a different one) that does not have the phosphate-containing compound and/or the refractory mineral filler incorporated therein. As such, the insulation product described herein can form a flame-resistant layer of a multi-layer insulation product.

### The Fibrous Mineral

The fibrous mineral used in the flame resistant insulation product described herein can be any of the fibrous mineral substances traditionally used in insulation products. For example, the fibrous mineral can be a wool formed from substances such as glass. In one embodiment, the fibrous mineral is glass fiber, such as in the form of glass wool. The glass used to make such fiberglass insulation can be any of the known insulation-grade glasses, including soda borosilicate glasses and alumina borosilicate glasses, for example.

The size of the mineral fibers will depend on the intended use, and can be substantially any of the sizes of known mineral fibers. For example, glass fibers used to make non-woven mats will often have a diameter in the range from 0.5 to 20 micrometers and a length of 0.5 to 3 inches. Further by way of example, glass wools can be made using fibers having a diameter in the range from 3 to 20 micrometers and indeterminate length (i.e., very long fibers).

The physical form of the mineral fibers is not critical. The fibers can be in the form of a wool, in the form of a woven or non-woven mat or fabric, or loose. In embodiments in which the flame resistant insulation product is expected to be handled (e.g., cut, arranged, folded, or wrapped), the fibers are preferably held together, such as by weaving the fibers, entangling the fibers, or binding the fibers to one another using a binder (e.g., an adhesive polymeric binder).

### The Phosphate-Containing Compound

The insulation product described herein comprises a phosphate-containing compound (PCC) which is monoammonium phosphate, which is a non-flammable compound that can be incorporated on or among the mineral fibers in a dispersed form. By way of example, the PCC can be incorporated into the insulation product as a particulate interspersed among the mineral fibers. The PCC can be held in place by incorporating it into or mixing or contacting it with a binder (e.g., a phenolic resin) or a liquid component (e.g., a dust-suppressing oil additive) of the insulation product.

Only the method of applying to a fibrous mineral matrix a non-cured binder composition comprising the PCC and the RMF in particulate form is part of the invention.

The flame resistance of the insulation product can be expected to increase as the proportion of PCC in the insulation product increases. If the proportion of PCC in the insulation product is very low (e.g., <8% of the weight of the insulation product is PCC), then minimal flame resistance can be expected. If the of PCC in the insulation product is very high (e.g., >30% of the weight of the insulation product is PCC), then the physical form of the insulation product may prove to be undesirable (e.g., too brittle, powdery, or rigid) for certain applications.

When a physical characteristic (e.g., thickness or flexibility) of the finished insulation product is of critical importance, the form and amount of the PCC incorporated into the insulation product should be selected so as not to unduly diminish the critical characteristic. For example, flexibility is an important characteristic of insulation products intended to form or surround ducts. When the flame resistant insulation product described herein is intended to be used as flexible duct insulation, the PCC content and the form in which the PCC is applied should be selected such that the finished product retains sufficient flexibility for its intended purpose. Selection of PCC form and content in view of such considerations is within the skill of the ordinary artisan assisted by the present disclosure.

### The Refractory Mineral Filler

The insulation product described herein comprises a refractory mineral filler (RMF) , which is alumina or aluminum sulfate in particulate form, in addition to the mineral fiber and to the PCC. The RMF can be fixed on or interspersed among the mineral fibers. By way of example, the RMF can be incorporated into the insulation product as a continuous or semi-continuous coating on the mineral fibers, as a salt precipitated on the mineral fibers, or in a particulate, flaked, or fibrous form interspersed among the mineral fibers.

The RMF being in a particulate form, the particles should be of a size sufficiently small that they can be thoroughly dispersed throughout the fibrous mineral matrix. For example, when the fibrous matrix is a fiberglass wool, RMF particles having a number average particle size in the range from about 1 to 2 micrometers are suitable, although larger and smaller particles can be used. The RMF can be held in place by incorporating it into or mixing or contacting it with a binder (e.g., a phenolic resin) or a liquid component (e.g., an dust-suppressing oil additive) of the insulation Only the method of applying to a fibrous mineral matrix a non-cured binder composition comprising the PCC and the RMF in particulate form is part of the invention.

The flame resistance of the insulation product can be expected to increase as the proportion of RMF in the insulation product increases. If the proportion of RMF in the insulation product is very low (e.g., <8% of the weight of the insulation product is RMF), then minimal flame resistance can be expected. If the amount of RMF in the insulation product is very high (e.g., > 30% of the weight of the insulation product is RMF), then the physical form of the insulation product may prove to be undesirable (e.g., too brittle, powdery, or rigid) for certain applications .

It has been discovered that incorporation of both a PCC and an RMF into a fibrous mineral insulation significantly increases the flame resistance of the insulation, relative to incorporation of RMF alone. The PCC and the RMF are present in approximately equal amounts by weight. Together, the PCC and the RMF will enhance the flame resistance of an insulation product containing a fibrous mineral if the product contains at least 4% PCC + RMF by weight (i.e., the sum of PCC and RMF content is at least 4% of the weight of the insulation, which low percentage is not part of the invention).

According to the invention, the product contains at least about 6% PCC + RMF by weight, more preferably about 8%, and even more preferably about 11-12%. For example, one desirable product demonstrated in the examples herein is a fiberglass insulation product wherein about 11-12% of the weight of the product is an approximately equal (by weight) mixture of ammonium phosphate (a PCC) and aluminum sulfate (an RMF). The insulation product can contain a greater amount of the PCC/RMF mixture without significantly reducing the insulating ability of the insulation product. Although no explicit upper limit is placed on the PCC/RMF content of the insulation product described herein, it is believed that this value can be as great as at least 30% by weight in a product useful for insulating purposes.

### Other Components of the Insulation Product

The insulation product described herein need only contain a fibrous mineral, a PCC, and an RMF. However, it can comprise other components as well. For example, the insulation product can contain a binder for adhering components of the product. The binder can bind only the mineral fibers together or it can bind both of the PCC and the RMF with each other and/or the fibers. By way of example a binder that comprises one or both of the PCC and the RMF can be applied to the fibers to adhere the fibers into a discrete mass, such as a blanket or mat. Numerous binders suitable for use in fibrous insulation products are known in the art (e.g., phenolic materials, like phenol-formaldehyde resins or phenol urea formaldehyde, and melamine formaldehyde, acrylic, polyester, urethane, and furan binders), and substantially any such binder can be used in the flame resistant insulation product described herein.

If desired, a colorant can be incorporated into the mineral fibers or into a portion thereof. Such a colorant can be simply mineral fibers formed in the presence of or coated with a colorant. The colorant can alternatively be applied to the finished insulation product or incorporated into a binder that adheres the mineral fibers to one another. The colorant can be uniform (i.e., coloring substantially all mineral fibers), particulate, or fibrous. The colorant can distinguish the flame resistant insulation product described herein from insulation products having different properties and an otherwise similar appearance.

The insulation product can be adhered to a backing, such as a sheet of metal foil, plastic, paper, or the like. The backing can facilitate handling of the insulation product, serve a structural or sealing function (e.g., a vapor barrier for insulation to be installed in exterior residential walls), or some combination of these functions. The insulation product can be entirely contained within one or more layers of backing and, optionally, combined with structural components. By way of example, a flame resistant insulated flexible duct can be formed by sandwiching a metal wire coil or screen and a layer of the insulation product described herein between two backings, such as plastic or metal foil. The backing on the interior of the duct can be substantially impervious to mineral fibers and particles of the PCC and/or RMF that may be shed by the insulation product during handling, in order to prevent entry of such fibers and particles into the lumen of the duct.

The insulation product described herein can be incorporated as a layer into known insulation products. By way of example, the flame resistant insulation product herein can be adhered to or contacted with a layer of typical fiberglass insulation or laminated between two layers of fiberglass insulation.

### Methods of Making the Insulation Product

The method of the invention is a method of making the flame resistant insulation product of the invention comprising applying to a fibrous mineral matrix a non-cured binder composition comprising monoammonium phosphate and a refractory mineral filler in particulate form selected from the group consisting of alumina and aluminum sulfate, the monoammonium phosphate and the alumina or aluminum sulfate being present in approximately equal amounts by weight and the combined weight of the monoammonium phosphate and the alumina or aluminum sulfate is at least 6% of the weight of the insulation product.

It is important that the PCC and the RMF, which are respectively monoammonium phosphate and a refractory mineral filler in particulate form selected from the group consisting of alumina and aluminum sulfate, be thoroughly dispersed in the fibrous mineral matrix, or at least in that portion (e.g., one face) of the matrix for which enhanced flame resistance is desired. The PCC and the RMF are combined with the fibrous mineral in a manner that enhances the uniformity of the flame resistant properties of the insulation product, such as by applying substantially equal amounts of a relatively uniform mixture of PCC and RMF across the fibrous mineral matrix. Of course, in other embodiments, greater amounts of the PCC and the RMF can be applied to one portion of the fibrous mineral matrix, such as when that portion is more likely to be exposed to flame than are other portions of the matrix.

By way of example, it is common to make fiberglass insulation by collecting on a conveyor glass fibers formed by extrusion of molten glass through the walls of a spinning cylinder, spraying the collected fibers with an acrylic or phenolic binder, and subsequently curing the binder to form a unitary mat of bound fiberglass fibers. This process can be modified so that each of the PCC and the RMF are included in the binder composition that is sprayed onto the fibers prior to curing.

Any liquid carrier used to apply the PCC and/or RMF to the fibrous mineral matrix should be cured prior to use of the insulation product.

### Methods of Improving the Flame Resistance of an Existing Insulation

The flame resistant insulation product described herein can be manufactured prior to installation of the product. However, in another embodiment the flame resistance of an existing or installed fibrous insulation is improved by incorporating both a PCC and an RMF into at least a portion of the insulation. This treatment can alleviate the need to remove relatively non-flame resistant insulation and replace it with a more flame-resistant insulation if it becomes more likely that flames can occur in the environment of the insulation.

When the PCC and the RMF are applied to an existing fibrous insulation, they can be applied primarily to a surface of the insulation and to fibers near that surface. Preferably, however, the PCC and RMF are distributed within the insulation as well.

### Use of the Insulation Product

The flame resistant insulation product described herein can be used in place of substantially any other similar insulation product that does not exhibit its flame resistant properties. In view of those properties, the product described herein can also be used in many situations in which traditional mineral fiber insulations are unsuitable, including environments prone to fire, flame, sparks, and the like. The product can also be used as insulation or shielding near electrical connections. Because the products described herein exhibit greater flame resistance, including lower ignition tendency, they need not be as heavily or completely shielded from flame as known fibrous insulating materials.

Examples of purposes for which the insulation products described herein can be used include residential and commercial thermal and sound insulation (for both interior and exterior walls) and incorporation into sound- or thermally-insulated manufactured items, such as insulated flexible air ducts. The insulation can also be wrapped around or applied against pipes and other equipment.

### Examples

The invention is now described with reference to the following Examples. These Examples are provided for the purpose of illustration only.

### Example 1

The effect of particulate alumina and aluminum sulfate on flame resistance of approximately one-inch-think slices of R30 fiberglass insulation was assessed. The effect of particle size was assessed using alumina preparations having different average particle sizes - either one micron ("1 micron pA" in Table 1) or two microns (2 micron pA" in Table 1). The effect of particle loading on flame resistance of the insulation was assessed by varying the particle content of the insulation.

The particulate refractory mineral filler was prepared by suspending either 7.3 or 14.6 grams of either aluminum sulfate or alumina (2 micrometer particle size Hydral H716 alumina or 1 micrometer particle size Hydral H710 alumina) in a solution consisting of 525 milliliters of water and 225 milliliters of isopropyl alcohol. For each sample, an approximately ten-inch-thick piece of R30 fiberglass insulation was divided into one-inch-thick layers, and individual layers were cut into twelve-inch square quarters, and 240 milliliters of the suspension was poured onto the insulation quarters to evenly distribute the particles in the insulation. Each quarter was then divided into four six-inch squares for flame testing. The particulate content of each sample was determined by comparing the dry weight of the sample after drying at room temperature with the pre-treatment weight of the sample. Additive content values ("Add. Content" in Table 1) are expressed in terms of the percent weight of the dried, treated sample. The insulation sample was dried prior to use in individual flame tests.

For each flame test, a six inch square insulation sample was suspended horizontally, and a Bunsen burner was placed under the sample, with the hottest part (ca. 1760 degrees Fahrenheit) of the flame contacting the lower surface of the sample. The time required for the flame to be visible at the top of the insulation sample ("Burn-Thru Time" in Table 1) was measured in seconds and averaged over the number ("n" in Table 1) of samples tested.

Control samples were treated with the solution having no particulate refractory mineral filler suspended therein ("None" in Table 1).

The results of the experiments described in this Example are listed in Table 1. Samples containing refractory mineral fillers exhibited greater flame resistance than corresponding control samples. The effect of particle size on flame resistance appeared to be minimal for the alumina particle sizes (1 and 2 microns) tested. At comparable additive content values, samples containing aluminum sulfate appeared to exhibit somewhat better flame resistance than did samples containing alumina. Significant increases in flame resistance were observed at particle content values of about 5%, 10%, and 20% for all mineral fillers tested.

**Table 1**

| Sample Identifier | Additive | Pre-Add. Weight (g) | Post-Add. Weight (g) | Add. Content (% weight) | n | Average Burn-Thru Time (sec. per inch) |
|---|---|---|---|---|---|---|
| Control 1 | None | 18.24 | 18.25 | 0.05% | 3 | 66 |
| A-21-1 | 2 micron pA | 21.74 | 24.19 | 10.13% | 3 | 83 |
| A-21-2 | 2 micron pA | 19.39 | 21.76 | 10.89% | 2 | |
| A-22-1 | 2 micron pA | 16.70 | 21.07 | 20.74% | 3 | 105 |
| A-22-2 | 2 micron pA | 18.32 | 23.03 | 20.45% | 3 | |
| A-15-1 | 1 micron pA | 18.46 | 19.59 | 5.77% | 3 | 125 |
| A-11-1 | 1 micron pA | 18.10 | 20.54 | 11.88% | 3 | 93 |
| A-11-2 | 1 micron pA | 19.85 | 22.39 | 11.34% | 3 | |
| A-12-1 | 1 micron pA | 20.55 | 24.90 | 17.47% | 3 | 105 |
| A-12-2 | 1 micron pA | 18.83 | 23.25 | 19.01% | 3 | |
| AS-5-1 | pAS | 19.27 | 20.30 | 5.07% | 3 | 135 |
| AS-1-1 | pAS | 18.03 | 20.32 | 11.27% | 3 | 101 |
| AS-1-2 | pAS | 21.32 | 23.67 | 9.93% | 3 | |
| AS-2-1 | pAS | 16.11 | 20.27 | 20.52% | 3 | 145 |
| AS-2-2 | pAS | 17.50 | 22.24 | 21.31% | 3 | |

### Example 2

The effect of particulate aluminum sulfate ("AS" in Table 2) combined with particulate ammonium phosphate ("AP" in Table 2) on flame resistance of approximately one inch-think slices of R13 fiberglass insulation was assessed. The effect of particle loading on flame resistance of the insulation was assessed by varying the particle content of the insulation.

The particulate refractory mineral filler was prepared by suspending either 4.5 or 9.0 grams each of aluminum sulfate and ammonium phosphate in a solution consisting of 525 milliliters of water and 225 milliliters of isopropyl alcohol. For each sample, an approximately twelve inch square of one-inch-thick insulation was cut into six-inch square quarters, and 240 milliliters of the suspension was poured onto the insulation to evenly distribute the particles in the insulation. The particulate content of each sample was determined by comparing the dry weight of the sample after drying at room temperature with the pre-treatment weight of the sample. Additive content values ("Add. Content" in Table 2) are expressed in terms of the percent weight of the dried, treated sample. The insulation sample was dried prior to use in individual flame tests.

For each flame test, a six inch square insulation sample was suspended horizontally, and a Bunsen burner was placed under the sample, with the hottest part (ca. 1760 degrees Fahrenheit) of the flame contacting the lower surface of the sample. The time required for the flame to be visible at the top of the insulation sample ("Burn-Thru Time" in Table 2) was measured in seconds and averaged over the number ("n" in Table 2) of samples tested.

Control samples were treated with the solution having no particulate refractory mineral filler suspended therein ("None" in Table 2) or were treated with no solution ("N/A" in Table 2).

The results of the experiments described in this Example are listed in Table 2. Samples containing about 6-7% by weight AS+AP (i.e., 3-3.5% each of AS and AP) exhibited significantly greater flame resistance than corresponding control samples. The flame resistance of samples containing about 11-12% by weight AS+AP (i.e., 5.5-6% each of AS and AP) was dramatically greater than that of samples containing about 6-7% by weight AS+AP.

**Table 2**

| Sample Identifier | Additive | Pre-Add. Weight (g) | Post-Add. Weight (g) | Add. Content (% weight) | n | Average Burn-Thru Time (sec. per inch) |
|---|---|---|---|---|---|---|
| Control 1 | None | 31.07 | 31.11 | 0.13% | 2 | 94 |
| Control 2 | None | 35.89 | 35.90 | 0.03% | 2 | |
| Control 3 | None | 31.41 | 31.47 | 0.19% | 2 | |
| Control 4 | None | 29.53 | 29.60 | 0.24% | 2 | |
| ASAP1-1 | AS & AP | 33.45 | 35.70 | 6.30% | 2 | 220 |
| ASAP1-2 | AS & AP | 31.91 | 34.30 | 6.97% | 2 | |
| ASAP2-1 | AS & AP | 31.97 | 35.89 | 10.92% | 2 | 2256 |
| ASAP2-2 | AS & AP | 32.97 | 37.50 | 12.08% | 2 | |

## Claims

1. A flame resistant insulation product comprising a fibrous mineral and a particulate refractory mineral filler selected from the group consisting of alumina and aluminum sulfate,
said flame resistant insulation product being **characterized in that** it further comprises monoammonium phosphate, the monoammonium phosphate and the alumina or aluminum sulfate being present in approximately equal amounts by weight and the combined weight of the monoammonium phosphate and the alumina or aluminum sulfate is at least 6% of the weight of the insulation product.

2. The insulation product of claim 1, wherein the fibrous mineral is glass wool.

3. The insulation product of any of claims 1 and 2, wherein the combined weight of the monoammonium phosphate and the alumina or aluminum sulfate is at least about 11% of the weight of the insulation product.

4. The insulation product of any of the preceding claims, wherein the fibrous mineral is in a form selected from the group consisting of a blanket, a batt or a shaped article, especially a duct.

5. The insulation product of any of the preceding claims, attached to a sheet that comprises at least one of paper, a polymer, and metal foil.

6. A method of making a flame resistant insulation product of any of the preceding claims, the method comprising applying to a fibrous mineral matrix a non-cured binder composition comprising monoammonium phosphate and a refractory mineral filler in particulate form selected from the group consisting of alumina and aluminum sulfate, the monoammonium phosphate and the alumina or aluminum sulfate being present in approximately equal amounts by weight and the combined weight of the monoammonium phosphate and the alumina or aluminum sulfate is at least 6% of the weight of the insulation product.

## Patentansprüche

1. Flammbeständiger Dämmstoff enthaltend ein faserförmiges Mineral und ein partikelförmiges feuerfestes Füllmineral ausgewählt aus der Gruppe bestehend aus Aluminiumoxid und Aluminiumsulfat, **dadurch gekennzeichnet dass** der flammbeständige Dämmstoff zusätzlich Monoammoniumphosphat aufweist,
wobei das Monoammoniumphosphat und das Aluminiumoxid oder Aluminiumsulfat in etwa gleichen Gewichtsanteilen vorliegen und das Gesamtgewicht des Monoammoniumphosphats und des Aluminiumoxids oder Aluminiumsulfats wenigstens 6% Gew.-% des Dämmstoffs ausmacht.

2. Dämmstoff nach Anspruch 1, worin das faserförmige Mineral Glaswolle ist.

3. Dämmstoff nach Anspruch 1 oder 2, worin das Gesamtgewicht des Monoammoniumphosphats und des Aluminiumoxids oder Aluminiumsulfats wenigstens etwa 11 % Gew.-% des Dämmstoffs ausmachen.

4. Dämmstoff nach einem der vorherigen Ansprüche, worin das faserförmige Mineral in einer Form vorliegt, die ausgewählt ist aus der Gruppe bestehend aus einer Decke, einer Matte, einem geformten Artikel, insbesondere einem Kanal.

5. Dämmstoff nach einem der vorherigen Ansprüche, der mit einem Blatt, welches wenigstens ein Papier, ein Polymer oder eine Metallfolie aufweist, verbunden ist.

6. Verfahren zur Herstellung eines flammbeständigen Dämmstoffs nach einem der vorherigen Ansprüche, wobei das Verfahren das Aufbringen eines nichtausgehärteten Bindemittels enthaltend Monoammoniumphosphat und ein partikelförmiges feuerfestes Füllmineral ausgewählt aus der Gruppe bestehend aus Aluminiumoxid und Aluminiumsulfat, auf ein faserförmiges Mineral umfasst, wobei das Monoammoniumphosphat und das Aluminiumoxid oder Aluminiumsulfat in etwa gleichen Gewichtsanteilen vorliegen und das Gesamtgewicht des Monoammoniumphosphats und des Aluminiumoxids oder Aluminiumsulfats wenigstens 6% Gew.-% des Dämmstoffs ausmacht.

## Revendications

1. Produit d'isolation résistant au feu, comprenant un composant minéral fibreux et une charge minérale réfractaire sous forme de particules, choisie dans le groupe constitué d'alumine et de sulfate d'aluminium
ledit produit d'isolation résistant au feu étant **caractérisé en ce qu'**il comprend en outre du phosphate de monoammonium, le phosphate de monoammonium et l'alumine ou le sulfate d'aluminium étant présents en des quantités pondérales à peu près égales et le poids total de phosphate de monoammonium et d'alumine ou de sulfate d'aluminium représentant au moins 6 % du poids du produit d'isolation.

2. Produit d'isolation selon la revendication 1, dans lequel le composant minéral fibreux est de la laine de verre.

3. Produit d'isolation selon l'une quelconque des revendications 1 et 2, dans lequel le poids total de phosphate de monoammonium et d'alumine ou de sulfate d'aluminium représente au moins environ 11 % du poids du produit d'isolation.

4. Produit d'isolation selon l'une quelconque des revendications précédentes, dans lequel le composant minéral fibreux est sous une forme choisie dans le groupe constitué de rouleaux, panneaux, articles formés, en particulier conduits.

5. Produit d'isolation selon l'une quelconque des revendications précédentes, fixé sur une feuille comprenant au moins un matériau choisi parmi le papier, un polymère et une feuille métallique.

6. Procédé de fabrication d'un produit d'isolation résistant au feu selon l'une quelconque des revendications précédentes, le procédé comprenant l'application, sur une matrice d'un composant minéral fibreux, d'une composition de liant non-durcie comprenant du phosphate de monoammonium et une charge minéral réfractaire sous forme de particules, choisie dans le groupe constitué d'alumine et de sulfate d'aluminium, le phosphate de monoammonium et l'alumine ou de sulfate d'aluminium étant présents à peu près en des quantités pondérales égales et le poids total de phosphate de monoammonium et d'alumine ou de sulfate d'aluminium représentant au moins 6 % du poids du produit d'isolation.
